# EUROPEAN PATENT APPLICATION

(11) **EP 4 700 960 A1**
(43) Date of publication of application: **25.02.2026**
(21) Application number: 25197105.7
(22) Date of filing: 20.08.2025
(51) Int. Cl.: H01M 50/42, H01M 4/13, H01M 50/446, H01M 50/449, H01M 50/451, H01M 10/052, H01M 4/62

(54) **BINDER FOR RECHARGEABLE LITHIUM BATTERY, ELECTRODE INCLUDING THE SAME AND RECHARGEABLE LITHIUM BATTERY INCLUDING THE SAME**

(30) Priority: 22.08.2024 KR 20240112987
(71) Applicant: SAMSUNG SDI CO., LTD., Yongin-si, Gyeonggi-do 17084 (KR)
(72) Inventor: PARK, Sujin, Yongin-si, Gyeonggi-do 17084 (KR); LEE, Kukjoo, Yongin-si, Gyeonggi-do 17084 (KR); CHO, Yunshik, Yongin-si, Gyeonggi-do 17084 (KR); JUNG, Kyunghwa, Yongin-si, Gyeonggi-do 17084 (KR); CHOI, Jewon, Yongin-si, Gyeonggi-do 17084 (KR); CHO, Minho, Yongin-si, Gyeonggi-do 17084 (KR); KIM, Hana, Yongin-si, Gyeonggi-do 17084 (KR); LEE, Hyunseop, Yongin-si, Gyeonggi-do 17084 (KR); HAN, Imkyung, Yongin-si, Gyeonggi-do 17084 (KR); KIM, Eunji, Yongin-si, Gyeonggi-do 17084 (KR); CHOI, Kyubuem, Yongin-si, Gyeonggi-do 17084 (KR)
(74) Representative: Meissner Bolte Partnerschaft mbB

(57) **Abstract**

The present invention relates to a binder for a rechargeable lithium battery having a core-shell structure. The shell includes a first structural unit derived from a (meth)acrylic acid-based monomer; a second structural unit derived from a (C1-C10) alkylene glycol-based monomer; and a third structural unit derived from a zwitterionic vinyl-based monomer or a zwitterionic (meth)acryl-based monomer. The binder for a rechargeable lithium battery has high adhesive strength and low resistance, and thus can contribute to improving the performance of a rechargeable lithium battery.

## Description

### BACKGROUND

### 1. Field

Binders for rechargeable lithium batteries, and electrodes and rechargeable lithium batteries including the binders are disclosed.

### 2. Description of the Related Art

With increasing presence of electronic devices that use batteries, such as, e.g., mobile phones, laptop computers, electric vehicles, and the like, the demand for small, lightweight, and relatively high-capacity rechargeable batteries is increasing. In particular, rechargeable lithium batteries may be attractive as a power source for portable devices because they are typically lightweight and have high energy density.

Rechargeable lithium batteries include a positive electrode and a negative electrode including an active material capable of intercalating and deintercalating lithium ions, and an electrolyte solution, and electrical energy is produced through oxidation and reduction reactions when lithium ions are intercalated and deintercalated from the positive electrode and negative electrode.

Binders are included in various components of rechargeable lithium batteries. The binder may have high adhesive strength, but binders with high adhesive strength generally have the disadvantage of high resistance.

### SUMMARY

The present invention relates to a binder for a rechargeable lithium battery having high adhesive strength and low resistance.

The binder of the present invention for a rechargeable lithium battery has a core-shell structure, wherein the shell includes a first structural unit derived from a (meth)acrylic acid-based monomer, a second structural unit derived from a (C1-C10) alkylene glycol-based monomer, and a third structural unit derived from a zwitterionic vinyl-based monomer or a zwitterionic (meth)acryl-based monomer.

The present invention also relates to an electrode for a rechargeable lithium battery, wherein the electrode includes the binder for a rechargeable lithium battery and an electrode active material.

The present invention further concerns a separator for a rechargeable lithium battery, wherein the separator includes a porous substrate and a coating layer positioned on one surface, or on both surfaces, of the porous substrate, wherein the coating layer includes the binder for a rechargeable lithium battery.

In a further aspect, the invention relates to a rechargeable lithium battery, which includes a negative electrode, a positive electrode, a separator between the negative electrode and the positive electrode, and an electrolyte, wherein at least one of the negative electrode, positive electrode, and separator includes the binder.

The binder for a rechargeable lithium battery may have high adhesive strength and low resistance, and thus can contribute to improving the performance of a rechargeable lithium battery.

### BRIEF DESCRIPTION OF THE DRAWINGS

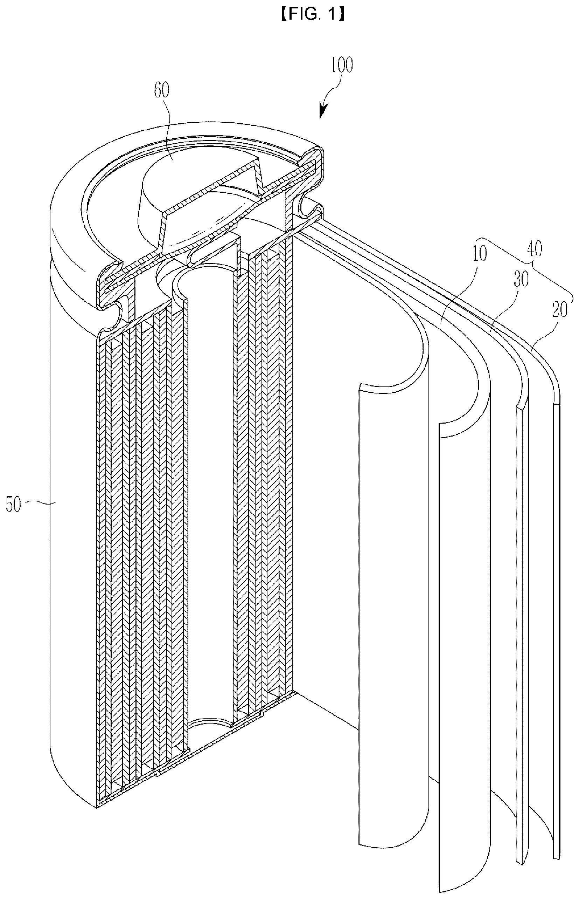

FIGS. 1 to 4 are diagrams schematically illustrating a rechargeable lithium battery, according to some example embodiments.

### DETAILED DESCRIPTION

Hereinafter, example embodiments of the present disclosure are described in detail. However, these embodiments are examples, the present disclosure is not limited thereto, and the present disclosure is defined by the scope of claims.

As used herein, when specific definition is not otherwise provided, it is understood that when an element such as a layer, film, region, or substrate is referred to as being "on" another element, it may be directly on the other element or intervening elements may also be present.

As used herein, when specific definition is not otherwise provided, the singular may also include the plural. In addition, unless otherwise specified, "A or B" may indicate "including A, including B, or including A and B."

As used herein, "combination thereof" may indicate a mixture, a stack, a composite, a copolymer, an alloy, a blend, or a reaction product of constituents.

As used herein, when a definition is not otherwise provided, a particle diameter may be an average particle diameter. This average particle diameter indicates an average particle diameter (D50), which is a diameter of particles with a cumulative volume of 50 volume% in the particle size distribution. The average particle diameter (D50) can be measured by methods known to those skilled in the art, for example, by measuring with a particle size analyzer, a transmission electron microscope or scanning electron microscope. Alternatively, a dynamic light-scattering measurement device is used to perform a data analysis, and the number of particles is counted for each particle size range. From this, the average particle diameter (D50) value may be easily obtained through a calculation. A laser diffraction method may also be used. When measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter (D50) based on 50% of the particle size distribution in the measuring device can be calculated.

As used herein, when specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, when specific definition is not otherwise provided, "substituted" refers to replacement of at least one hydrogen atom by a substituent such as at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

Additionally, as used herein, when specific definition is not otherwise provided, "hetero" indicates that the chemical formula contains at least one hetero atom of at least one of N, O, S, and P.

Additionally, as used herein, when specific definition is not otherwise provided, "(meth)acrylate" indicates both "acrylate" and "methacrylate," and "(meth)acrylic acid" indicates both "acrylic acid" and "methacrylic acid."

As used herein, when specific definition is not otherwise provided, "combination" refers to mixing or copolymerization.

In chemical formulas of the present specification, when specific definition is not otherwise provided, hydrogen is bonded at the position when a chemical bond is not drawn where supposed to be given.

In this specification, the weight average molecular weight (Mw) may be a value measured using gel permeation chromatography (GPC).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Binder

According to the invention, the binder for a rechargeable lithium battery has a core-shell structure, wherein the shell includes a first structural unit derived from a (meth)acrylic acid-based monomer; a second structural unit derived from a (C1-C10) alkylene glycol-based monomer; and a third structural unit derived from a zwitterionic vinyl-based monomer or a zwitterionic (meth)acryl-based monomer.

The binder for a rechargeable lithium battery having the core-shell structure may strengthen adhesive strength by introducing a highly flexible polymer into the core portion to facilitate pressing of the binder, and can improve adhesive strength by introducing a polymer in which a monomer that increases adhesive strength and a monomer that improves ionic conductivity are polymerized together into the shell portion to simultaneously or contemporaneously increase the conductivity of lithium ions, and effectively lower the resistance of the binder. Using the binder for a rechargeable lithium battery having the core-shell structure with the above characteristics may improve the trade-off between resistance and adhesion, which is a typical limitation of existing particle-type binders and acryl-based binders, and may minimize side effects that may occur during rapid charging with low resistance, while improving cell performance and cycle-life compared to batteries using existing technologies.

For example, a binder having only the first structural unit and the second structural unit may increase the adhesive strength of the active material layer to the current collector, but may not sufficiently improve the electrical resistance of the active material layer. In another example, a binder having only the first structural unit and the third structural unit is insoluble in water, making it difficult to manufacture an active material layer, and the viscosity thereof is too low, making it difficult to manufacture the target active material layer. Accordingly, a binder that includes a third structural unit in addition to a binder that includes a first structural unit and a second structural unit may improve electrical resistance by increasing a degree of lithium ion transfer, as well as provide the desired adhesive strength.

Hereinafter, each structural unit is described in detail.

The first structural unit derived from the (meth)acrylic acid-based monomer may be represented by Chemical Formula 1-1 or 1-2:

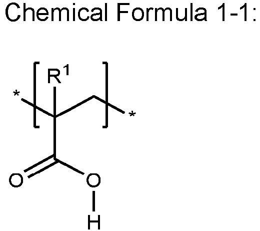

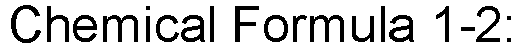

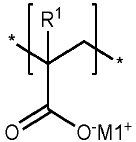

In Chemical Formulas 1-1 and 1-2, R¹ may be the same or different, and each R¹ may independently be or include a hydrogen atom or a C1 to C20 alkyl group, and M1 may be or include an alkali metal.

For example, the first structural unit may be derived from acrylic acid, R¹ can be all hydrogen atoms, and M1 may be derived from a metal ion in the electrolyte, for example, a lithium atom.

In some example embodiments, the first structural unit may be included in an amount in a range of about 50 wt% to about 98 wt%, about 60 wt% to about 90 wt%, or about 70 wt% to about 80 wt%, based on 100 wt% of the first structural unit, the second structural unit, and the third structural unit. In the above range, the binder has a desired viscosity, thereby facilitating the manufacture of an active material layer, and improving adhesive strength.

The second structural unit derived from a (C1-C10) alkylene glycol-based monomer may be represented by Chemical Formula 2-1 or 2-2:

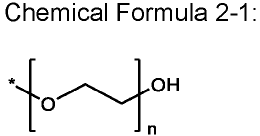

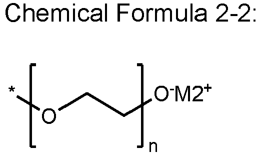

In Chemical Formula 2-1 or 2-2, M2 may be or include an alkali metal, and n may be an integer in a range from 1 to 100.

For example, the second structural unit can be derived from ethylene glycol, in which case n can be in a range from 5 to 20, or from 5 to 10, and M2 may be derived from a metal ion in the electrolyte, for example a lithium atom.

In some example embodiments, the second structural unit may be included in an amount in a range of about 1 wt% to about 25 wt%, about 5 wt% to about 20 wt%, or about 10 wt% to about 15 wt%, based on 100 wt% of the first structural unit, the second structural unit, and the third structural unit. In the above range, the binder may contribute to further reducing resistance by increasing ionic conductivity.

The third structural unit derived from the zwitterionic vinyl-based monomer or the zwitterionic (meth)acryl-based monomer may have both a cationic functional group and an anionic functional group in the molecule, and may have at least one of a vinyl group and a (meth)acrylic group for polymerization with other structural units.

The cationic functional group may be or include a functional group exhibiting a monovalent or polyvalent positive charge in an aqueous solvent, and may be or include, for example, at least one of a substituted or unsubstituted ammonium cation (NH₄⁺), an imidazolium cation, a pyrazolium cation, a pyridinium cation, a piperidinium cation, a piperazinium cation, a sulfide cation, a naphthalenium cation, and a guanidium cation, but is not limited thereto. For example, the cationic functional group may be or include a substituted or unsubstituted ammonium cation or an imidazolium cation.

The anionic functional group may be or include a functional group exhibiting a monovalent or polyvalent negative charge in an aqueous solvent, and may be or include, for example, a functional group having at least one of sulfur (S), nitrogen (N), carbon (C), phosphorus (P), and oxygen (O). For example, the anionic functional group may be or include at least one of -SO₃⁻, -CO₂⁻, -O⁻-, and -NR⁻. Here, R may be or include a substituted or unsubstituted alkyl group having 1 to 10 carbon atoms, or a haloalkyl group having 1 to 10 carbon atoms.

The third structural unit derived from a zwitterionic vinyl-based monomer or a zwitterionic (meth)acryl-based monomer may be represented by Chemical Formula 3-1 or 3-2.

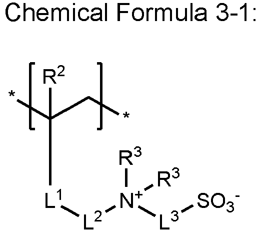

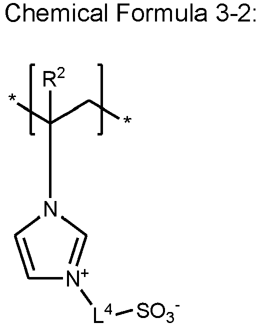

In Chemical Formulas 3-1 and 3-2, R² may be the same or different, and may each independently be or include a hydrogen atom, or a C1 to C20 alkyl group; R³ may be the same or different, and can each independently be or include a hydrogen atom, or a C1 to C20 alkyl group; L¹ may be or include *-(C=O)-NR³-CH₂-* or *-(C=O)-O-*; and L² to L⁴ may each independently be or include a single bond, or a C1 to C20 alkylene group.

The third structural unit derived from the zwitterionic vinyl-based monomer or the zwitterionic (meth)acryl-based monomer may be derived from at least one of a sulfobetaine-based monomer, a phosphobetaine-based monomer, a carboxybetaine-based monomer, and an imidazolium-based monomer, and for example, may be derived from a sulfobetaine-based monomer or a vinylimidazolium sulfonate-based monomer.

When the third structural unit may be derived from sulfobetaine (SB) and may be represented by Chemical Formula 3-1, R² and R³ may be or include a methyl group; L¹ may be the same or different and may each independently be or include *-(C=O)-NR³-CH₂-* or *-(C=O)-O-*; and L² and L³ may both be or include ethylene groups.

When the third structural unit is derived from vinylimidazolium sulfonate (IMS) and is represented by Chemical Formula 3-2, R² may be or include a hydrogen atom; and L⁴ may be or include a butylene group.

In some example embodiments, the third structural unit may be included in an amount in a range of about 1 wt% to about 25 wt%, about 5 wt% to about 20 wt%, or about 10 wt% to about 15 wt%, based on 100 wt% of the first structural unit, the second structural unit, and the third structural unit. In the above range, the adhesive strength of the active material layer to the collector may be increased, and the electrical resistance may be reduced.

A weight ratio of the second structural unit to the third structural unit in the binder may be in a range about 1:2 to about 3:1, for example, about 1:1 to about 3:1, or about 1:1 to about 2:1, or about 1:1 to about 1.5:1. When the second structural unit and the third structural unit are included in the above weight ratio, the binder may increase the adhesive strength of the active material layer to the current collector, and may also reduce the electrical resistance thereof.

In some example embodiments, the binder for a rechargeable lithium battery may further include a fourth structural unit derived from a (meth)acryl-based monomer.

The (meth)acryl-based monomer may include an amide group or a nitrile group. For example, the fourth structural unit may be derived from acrylonitrile.

The fourth structural unit derived from a (meth)acryl-based monomer may be represented by Chemical Formula 4.

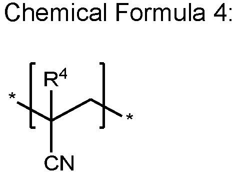

In Chemical Formula 4, R⁴ may be or include a hydrogen atom or a C1 to C20 alkyl group.

The fourth structural unit may be derived from, for example, acrylonitrile. For example, R⁴ may be or include a hydrogen atom.

In some example embodiments, based on 100 wt% of the first structural unit, the second structural unit, the third structural unit, and the fourth structural unit, the first structural unit may be included in an amount of about 40 wt% to about 70 wt%, the second structural unit may be included in an amount of about 1 wt% to about 15 wt%, the third structural unit may be included in an amount of about 1 wt% to about 15 wt%, and the fourth structural unit may be included in an amount of about 20 wt% to about 50 wt%. For example, based on 100 wt% of the first structural unit, the second structural unit, the third structural unit, and the fourth structural unit, the first structural unit may be included in an amount of about 40 wt% to about 60 wt%, the second structural unit may be included in an amount of about 2 wt% to about 10 wt%, the third structural unit may be included in an amount of about 2 wt% to about 10 wt%, and the fourth structural unit may be included in an amount of about 25 wt% to about 45 wt%, and as another example, the first structural unit may be included in an amount of about 55 wt% to about 65 wt%, the second structural unit may be included in an amount of about 5 wt% to about 10 wt%, the third structural unit may be included in an amount of about 5 wt% to about 10 wt%, and the fourth structural unit may be included in an amount of about 25 wt% to about 35 wt%. In the above range, the binder has a desired viscosity, thereby facilitating the manufacture of an active material layer and improving adhesive strength.

The binder according to the invention may further include a lithium salt, in which case better lithium ionic conductivity may be achieved within the electrode, thereby improving the electrochemical performance of the battery. The binder may form a chemical bond, such as an ionic bond, with the cation and/or anion of the lithium salt, or the binder and the lithium salt may be mixed. The lithium salt may be or include any common lithium salt included in rechargeable lithium batteries without limitation, and may be or include, for example, at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, LiC₄F₉SO₃, LiFSI, LiTFSI, LiOTf, LiDFOB, LiBOB, or a combination thereof.

In the binder for a rechargeable lithium battery having a core-shell structure according to the invention, the core may include a polymer in which a monomer including a vinyl-based monomer, an unsaturated carboxylic acid alkyl ester monomer, a metaacrylic acid monomer, an unsaturated carboxylic acid amide monomer, or a combination thereof is polymerized.

Based on 100 wt% of the binder for the rechargeable lithium battery, the core may be included in an amount of about 85 wt% to about 95 wt%, for example, about 90 wt% to about 95 wt%, and the shell may be included in an amount of about 5 wt% to about 15 wt%, for example, about 5 wt% to about 10 wt%. When the content of the core and shell is within the above range, the binder for a rechargeable lithium battery having the core-shell structure can have high ductility and facilitate pressing of the binder, thereby enhancing adhesive strength.

The average particle diameter (D50) of the core may be in a range of about 300 nm to about 900 nm, for example about 350 nm to about 850 nm, about 400 nm to about 800 nm, or about 450 nm to about 750 nm, and the average particle diameter (D50) of the entire core-shell structure can be in a range of about 600 nm to about 1300 nm, for example about 700 nm to about 1200 nm, about 800 nm to about 1100 nm, or about 900 nm to about 1000 nm. When the average particle diameters of the core and the core-shell structure are within the above range, the binder for a rechargeable lithium battery having the core-shell structure may have high ductility and facilitate pressing of the binder, thereby enhancing adhesive strength.

The binder may have a weight average molecular weight (Mw) in a range of about 20,000 g/mol to about 1,500,000 g/mol, for example, about 50,000 g/mol to about 2,500,000 g/mol. Within the above range, the binder can be applied to the active material layer. Herein, the "weight average molecular weight" may be a value calculated in polystyrene conversion terms by gel permeation chromatography.

The binder may be included as at least one of a binder for a positive electrode of a rechargeable lithium battery and a binder for a negative electrode of a rechargeable lithium battery.

### Rechargeable Lithium Battery

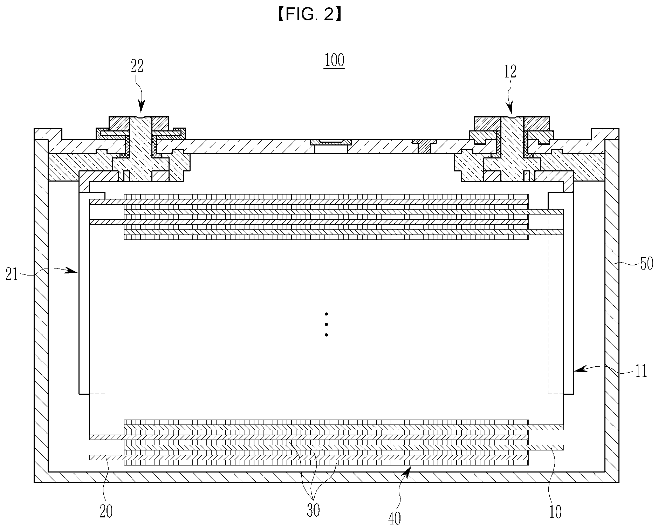

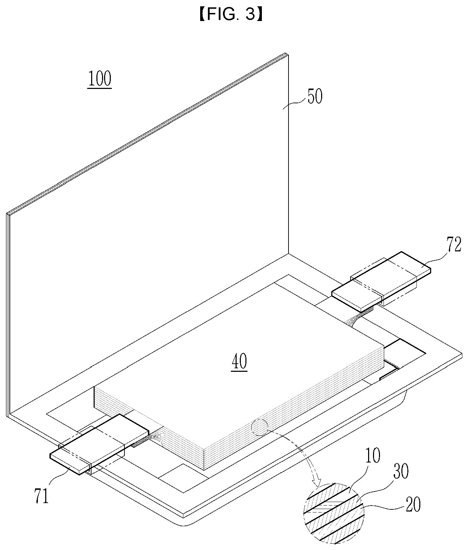

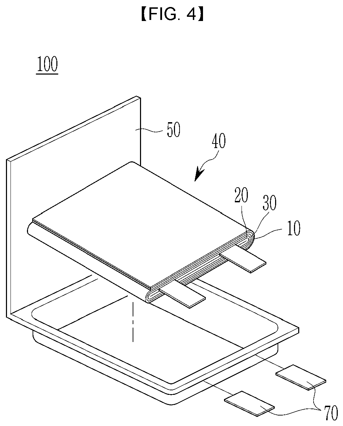

The rechargeable lithium battery may be classified into cylindrical, prismatic, pouch, or coin-type batteries, and the like depending on a shape thereof. FIGS. 1 to 4 are schematic diagrams illustrating the rechargeable lithium battery, according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery.

### Electrode

An electrode of the invention for a rechargeable lithium battery includes the aforementioned binder of the invention and an electrode active material.

Some example embodiments include an electrode composition for a rechargeable lithium battery including the aforementioned binder according to some example embodiments, an electrode active material, and a solvent. An electrode including the binder for a rechargeable lithium battery may be manufactured by applying the electrode composition to a current collector, drying the electrode composition, and compressing the electrode composition and the current collector.

The electrode may be or include a negative electrode or a positive electrode. The binder for a rechargeable lithium battery has high adhesive strength and low resistance, even when included in a negative electrode that undergoes a large volume change due to charge and discharge of a rechargeable lithium battery, and thus can contribute to improving the performance of a rechargeable lithium battery.

Hereinafter, an electrode for a rechargeable lithium battery according to some example embodiments is described.

### Negative Electrode

The negative electrode includes a current collector, and a negative electrode active material layer on the current collector. The negative electrode active material layer includes a negative electrode active material, and may further include a binder and/or a conductive material. The binder may be a binder of the aforementioned embodiment.

For example, the negative electrode active material layer may include about 90 wt% to about 99 wt%, or about 90 wt% to about 99.5 wt% of the negative electrode active material, about 0.5 wt% to about 5 wt% of the binder, and about 0 wt% to about 5 wt% of the conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is an element including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

In addition to the binder according to the aforementioned example embodiment, other binders may be included or added as the negative electrode binder. When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change in the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Positive Electrode

The positive electrode may include a current collector, and a positive electrode active material layer formed on the current collector. The positive electrode active material layer may include a positive electrode active material, and may further include a binder and/or a conductive material. The binder may be or include the aforementioned binder for a rechargeable lithium battery of the example embodiment.

A content of the positive electrode active material may be in a range of about 90 wt% to about 99 wt%, or about 90 wt% to about 99.5 wt% based on 100 wt% of the positive electrode active material layer, and the content of each of the binder and the conductive material may be in a range of about 0.5 wt% to about 5 wt% based on 100 wt% of the positive electrode active material layer.

The positive electrode active material may be or include a compound (lithiated intercalation compound) capable of intercalating and deintercalating lithium. For example, one or more types of composite oxides of lithium, and a metal such as or including at least one of cobalt, manganese, nickel, and combinations thereof, may be included.

The composite oxide may be or include a lithium transition metal composite oxide, and examples may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). .

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S. M¹ and M² may be or include different elements.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high-nickel positive electrode active material can achieve high capacity, and can be applied to high-capacity, high-density rechargeable lithium batteries.

In addition to the binder for a rechargeable lithium battery according to the invention, other binders may be included or added as the positive electrode binder. The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the electrically conductive material causes a chemical change. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but is not limited thereto.

### Electrolyte

The electrolyte for a rechargeable lithium battery of the invention may be or include, for example, an electrolyte solution, which may include a non-aqueous organic solvent and a lithium salt.

The non-aqueous organic solvent is configured as a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include at least one of cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be included alone or in combination of two or more solvents, and when two or more types of solvents are included in combination, a mixing ratio can be adjusted as desired depending on the intended battery performance, which is typically understood by those of ordinary skill in the art.

When using a carbonate-based solvent, a cyclic carbonate and a chain carbonate may be mixed, and the cyclic carbonate and the chain carbonate may be mixed in a volume ratio in a range of about 1:1 to about 1:9.

The non-aqueous organic solvent may further include an aromatic hydrocarbon-based organic solvent. For example, the carbonate solvent and the aromatic hydrocarbon organic solvent may be mixed and included in a volume ratio in a range of about 1:1 to about 30:1.

The electrolyte solution may further include at least one of vinylethyl carbonate, vinylene carbonate, or ethylene carbonate compounds to improve battery cycle-life.

Representative examples of the ethylene carbonate compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has a desired ionic conductivity and viscosity, and thus a desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one surface or on both surfaces of the porous substrate.

The porous substrate may be or include a polymer film formed of or including any one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON(polytetrafluoroethylene), or a copolymer or mixture of two or more thereof.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

In one example, the organic material of the coating layer may include the aforementioned binder according to the invention. That is a separator of the invention for a rechargeable lithium battery includes a porous substrate, and a coating layer on one surface or on both surfaces of the porous substrate, wherein the coating layer includes the aforementioned binder of the invention. In the coating layer, the binder may be included in an amount in a range of about 1 wt% to about 100 wt%, for example, the binder may be included in an amount of about 1 wt% to about 10 wt%, about 1 wt% to about 5 wt%, or about 80 wt% to about 100 wt%, about 90 wt% to about 100 wt%, or about 91 wt% to about 99 wt%, and the like, together with the inorganic material. The separator including the aforementioned binder in the coating layer may achieve desired or improved heat resistance and mechanical strength.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked together.

The thickness of the coating layer may be in a range of about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Preparation Example 1

### (1) Preparation of Shell Copolymer

Based on 100 parts by weight of a monomer mixture including 60 wt% of acrylic acid (AA), 30 wt% of acrylonitrile (AN), 5 wt% of sulfobetaine (SB), and 5 wt% of ethylene glycol (EG), an azo compound initiator and water were mixed therewith. The initiator was included in an amount of 0.2 parts by weight based on 100 parts by weight of the monomer mixture.

Subsequently, the obtained mixture was subjected to emulsion polymerization to prepare a solution including a shell copolymer. The prepared copolymer included a first structural unit derived from the acrylic acid, a second structural unit derived from the ethylene glycol, a third structural unit derived from the sulfobetaine, and a fourth structural unit derived from the acrylonitrile.

### (2) Preparation of Core-shell Particles

2-Ethylhexyl acrylate, styrene, and 1,4-butanediol diacrylate and ion-exchanged water were placed in a flask, the temperature was raised to 65 °C, and an initiator solution of 2,2'-azobis[N-(2-carboxyethyl)-2-methylpropionamidine]tetrahydrate dissolved in ion-exchanged water was added to obtain a solution including core particles. A solution including the shell copolymer was added to a solution including the core particles, and polymerization was performed at a temperature of 65°C for 12 hours or more to obtain a milky white binder dispersion.

The milky white binder dispersion corresponding to the core is a dispersion in which a binder formed by covering a core including a copolymer produced by copolymerizing the raw materials with the shell copolymer is stably dispersed in ion exchange water. The nonvolatile matter in the dispersion after the reaction was measured to be 19.5 mass%. Thereafter, the dispersion was concentrated by heated and depressurized distillation to remove unreacted monomers, and ammonia water and ion-exchange water were added to adjust the solid content to 20 wt% and the pH to 7 to 8.

### Preparation Examples 2 to 7

In the production of the shell copolymer, the production was carried out in substantially the same manner as in Preparation Example 1, with a difference that the contents of acrylic acid (AA), acrylonitrile (AN), sulfobetaine (SB), and ethylene glycol (EG) were changed to the contents described in Table 1 below.

**Table 1:**

| | Content of shell (wt%) | | | | Shell ratio (wt%) |
|---|---|---|---|---|---|
| | Acrylic acid | Ethylene glycol | Sulfobetaine | Acrylonitrile | |
| Preparation Example 1 | 60 | 5 | 5 | 30 | 5 |
| Preparation Example 2 | 50 | 5 | 5 | 40 | 7 |
| Preparation Example 3 | 50 | 5 | 10 | 35 | 10 |
| Preparation Example 4 | 45 | 10 | 15 | 30 | 5 |
| Preparation Example 5 | 60 | 10 | 0 | 30 | 2 |
| Preparation Example 6 | 55 | 0 | 10 | 35 | 20 |
| Preparation Example 7 | 35 | 20 | 20 | 25 | 20 |

### Example 1

### (1) Manufacturing of Negative Electrode

93.4 wt% of a graphite negative electrode active material, 4 wt% of a silicon-carbon composite negative electrode active material, 1.0 wt% of a carboxymethyl cellulose binder, 1.5 wt% of a binder prepared according to Preparation Example 1, and 0.1 wt% of a conductive material, were mixed in a water solvent to prepare a negative electrode active material layer slurry. The negative electrode active material layer slurry was coated on a copper foil current collector, and subsequently dried and compressed to manufacture a negative electrode.

### (2) Manufacturing of Positive Electrode

97.0 wt% of a LiNi_{0.88}Co_{0.105}Al_{0.015}O₂ positive electrode active material, 1.5 wt% of a polyvinylidene fluoride binder, and 1.5 wt% of a carbon nanotube conductive material were mixed to prepare a positive electrode active material layer slurry, and this positive electrode active material layer slurry was coated on an aluminum foil current collector, and subsequently dried and compressed to manufacture a positive electrode.

### (3) Preparation of Electrolyte Solution

Ethylene carbonate (EC), ethylmethyl carbonate (EMC), and dimethyl carbonate (DMC) were mixed in a volume ratio of 2:4:4 to prepare an organic solvent, and LiPF₆ lithium salt was mixed with the organic solvent at a concentration of 1.15 M to obtain an electrolyte solution.

### (4) Manufacturing of Rechargeable Lithium Battery Cell

The positive and negative electrodes were assembled with a polyethylene separator coated with an acryl-based function layer to obtain an electrode assembly, and after housing the electrode assembly into a prismatic case, the electrolyte solution was injected thereinto, manufacturing a rechargeable lithium battery cell.

### Examples 2 to 4

Each rechargeable lithium battery cell was manufactured substantially in the same manner as in Example 1 with a difference that the binder of Preparation Example 2 in Example 2, the binder of Preparation Example 3 in Example 3, and the binder of Preparation Example 4 in Example 4 were respectively used instead of the binder of Preparation Example 1 in manufacturing the negative electrode.

### Comparative Examples 1 to 3

In the manufacturing of the negative electrode, each rechargeable lithium battery was manufactured in substantially the same manner as in Example 1, with a difference that the binder prepared according to Preparation Example 5 was used in Comparative Example 1, the binder prepared according to Preparation Example 6 was used in Comparative Example 2, and the binder prepared according to Preparation Example 7 was used in Comparative Example 3 instead of the binder prepared according to Preparation Example 1.

### Evaluation Example 1: Ionic Conductivity

The ionic conductivity of the polymers prepared according to Examples 1 to 4 and Comparative Examples 1 to 3 was measured using a Viologic VSP EIS (Electrochemical Impedance Spectroscopy) instrument to measure impedance and calculate conductivity, and the results are shown in Table 2 below. The measurement conditions were measured at room temperature of 25 °C, and the initial frequency was measured from 500 KHz to the final frequency of 1 Hz.

### Evaluation Example 2: Electrode Plate Adhesive Strength

The negative electrodes according to Examples 1 to 4 and Comparative Examples 1 to 3 were respectively measured with respect to adhesive strength between current collector and negative electrode active material layer by using a Universal Testing Machine (UTM) tensile strength tester. A sample was prepared by attaching a slide glass (length x width = 7 cm x 2.5 cm) to one side of a double-sided adhesive tape (length x width = 4 cm x 2.5 cm) and each of the negative electrodes (length x width = 7 cm x 2.5 cm) onto the other side of the double-sided adhesive tape. The sample was mounted on the UTM tensile strength tester, and subsequently measured with respect to adhesive strength by peeling off the negative electrode from the slide glass at a peeling angle: 180°, a peeling temperature: 25 °C, and a peeling speed: 100 mm/min, and the results are shown in Table 2 below.

**Table 2:**

| | Binder | Ionic conductivity (S/cm) | Electrode plate adhesive strength (gf/mm) |
|---|---|---|---|
| Example 1 | Preparation Example 1 | 5.8 x 10⁻⁵ | 1.97 |
| Example 2 | Preparation Example 2 | 4.9 x 10⁻⁵ | 1.81 |
| Example 3 | Preparation Example 3 | 4.3 x 10⁻⁵ | 1.78 |
| Example 4 | Preparation Example 4 | 3.9 x 10⁻⁵ | 1.92 |
| Comparative Example 1 | Preparation Example 5 | 1.6 x 10⁻⁵ | 1.41 |
| Comparative Example 2 | Preparation Example 6 | 2.3 x 10⁻⁵ | 1.03 |
| Comparative Example 3 | Preparation Example 7 | 4.1 x 10⁻⁵ | 1.11 |

Referring to Table 2 above, the negative electrodes manufactured according to the Examples exhibited higher ionic conductivity compared to the negative electrodes manufactured according to the Comparative Examples, and that the slurries manufactured according to the Examples exhibited higher adhesive strength to the negative electrode current collector compared to the slurries manufactured according to the Comparative Examples.

### Evaluation Example 3: Battery Cell Characteristics Evaluation

### 1. Charging Rate

The battery cells using each of the binders of Examples 1 to 4 and Comparative Examples 1 to 3 were evaluated by charging them to a cut-off voltage of 4.25 V at constant current of 1.0 C at 25 °C. In the corresponding charging method, maximum charge capacity at which the cells reached 4.25 V was used to calculate a percentage (%) of the 'maximum charge capacity / total battery capacity,' which was shown as a charging rate in Table 3.

### 2. DC Internal Resistance (DC-IR; Direct current internal resistance)

The battery cells manufactured by using each of the binders of Examples 1 to 4 and Comparative Examples 1 to 3 and having cell capacity of 75 mAh were charged with a constant current/constant voltage under conditions of 0.2 C, 4.25 V, and 0.05 C cut-off, paused for 10 minutes, discharged at a constant current of 0.33 C under a condition of 2.80 V cut-off, and paused for 10 minutes at 25 °C to perform the 1^{st} charging and discharging and then, measured with respect to a voltage drop (V) occurring when a current of 1 C was passed for 10 second at SOC50 (a state of being charged to 50% of charge capacity based on 100% of total charge capacity, which also indicates a state of being discharged to 50% during the discharging), and then, this voltage drop was used to measure direct current internal resistance (DC-IR), and the results are shown in Table 3 below.

### 3. 200 Cycle-life Retention Rate

The cells of Examples 1 to 4 and Comparative Examples 1 to 3 were constant current-charged to a voltage of 4.2 V at a rate of 0.5 C, and subsequently, cut off at a rate of 0.025 C in the constant voltage mode at 25 °C. Subsequently, the cells were discharged to 2.5 V at a rate of 0.5 C, and this charge and discharge cycle was 200 times repeated to evaluate a capacity retention rate according to the number of cycles, that is, cycle-life characteristics, and the results are shown in Table 3 below.

**Table 3:**

| | Charging rate (%) | DC-IR (Ω) | Cycle-life retention rate (%) |
|---|---|---|---|
| Example 1 | 80 | 88.5 | 96 |
| Example 2 | 78 | 89.6 | 95 |
| Example 3 | 77 | 90.5 | 94 |
| Example 4 | 75 | 92.4 | 92 |
| Comparative Example 1 | 68 | 96.8 | 82 |
| Comparative Example 2 | 70 | 94.2 | 85 |
| Comparative Example 3 | 63 | 95.7 | 88 |

Referring to Table 5 above, the rechargeable lithium battery cells of the examples, compared to the rechargeable lithium battery cells of the comparative examples, exhibited a desired or improved cycle-life retention rate, as well as an improved charging rate and reduced DC-IR.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the scope of the appended claims.

### Description of symbols:

100: rechargeable lithium battery 10: positive electrode
11: positive electrode lead tab 12: positive terminal
20: negative electrode 21: negative electrode lead tab
22: negative terminal 30: separator
40: electrode assembly 50: case
60: sealing member 70: electrode tab
71: positive electrode tab 72: negative electrode tab

## Claims

1. A binder for a rechargeable lithium battery, the binder comprising:
a core-shell structure that comprises a core and a shell,
wherein the shell comprises:
a first structural unit derived from a (meth)acrylic acid-based monomer;
a second structural unit derived from a (C1-C10) alkylene glycol-based monomer; and
a third structural unit derived from a zwitterionic vinyl-based monomer or a zwitterionic (meth)acryl-based monomer.

2. The binder as claimed in claim 1, wherein the first structural unit is represented by Chemical Formula 1-1 or 1-2, and
the second structural unit is represented by Chemical Formula 2-1 or 2-2: 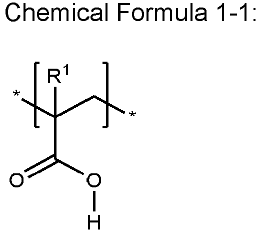 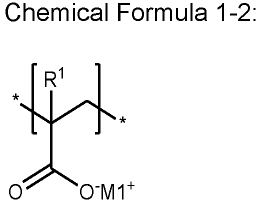
wherein, in Chemical Formulas 1-1 and 1-2,
each R¹ independently comprises a hydrogen atom, or a C1 to C20 alkyl group; and
M1 comprises an alkali metal, 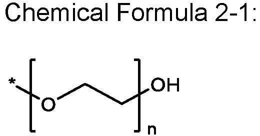 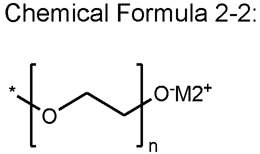
wherein, in Chemical Formulas 2-1 and 2-2,
M2 comprises an alkali metal, and
n is an integer in a range of 1 to 100.

3. The binder as claimed in claim 1 or 2, wherein the zwitterionic vinyl-based monomer or zwitterionic (meth)acryl-based monomer has at least one cationic functional group comprising at least one of a substituted or unsubstituted ammonium cation, an imidazolium cation, a pyrazolium cation, a pyridinium cation, a piperidinium cation, a piperazinium cation, a sulfide cation, a naphthalenium cation, and a guanidium cation.

4. The binder as claimed in any of claims 1-3, wherein the zwitterionic vinyl-based monomer or zwitterionic (meth)acryl-based monomer has at least one anionic functional group comprising at least one of -SO₃⁻, -CO₂⁻, -O⁻-, and -NR⁻,
wherein R comprises a substituted or unsubstituted C1 to C10 alkyl group.

5. The binder as claimed in any of claims 1-4, wherein the zwitterionic vinyl-based monomer or zwitterionic (meth)acryl-based monomer comprises at least one of a sulfobetaine-based monomer, a phosphobetaine-based monomer, a carboxybetaine-based monomer, and an imidazolium-based monomer.

6. The binder as claimed in any of claims 1-5, wherein the third structural unit is represented by Chemical Formula 3-1 or 3-2: 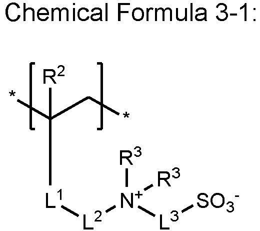 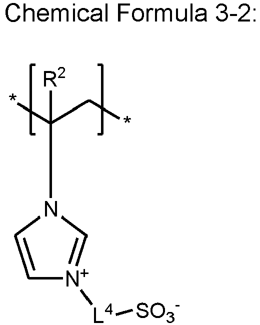
wherein, in Chemical Formulas 3-1 and 3-2,
each R² independently comprises a hydrogen atom, or a C1 to C20 alkyl group;
each R³ independently comprises a hydrogen atom, or a C1 to C20 alkyl group;
L¹ comprises *-(C=O)-NR³-CH₂-* or *-(C=O)-O-*;
L² to L⁴ each independently comprises a single bond, or a C1 to C20 alkylene group.

7. The binder as claimed in any of claims 1-6, wherein based on 100 wt% of the first structural unit, the second structural unit, and the third structural unit:
the binder comprises 50 wt% to 98 wt% of the first structural unit, 1 wt% to 25 wt% of the second structural unit, and 1 wt% to 25 wt% of the third structural unit.

8. The binder as claimed in any of claims 1-7, further comprising:
a fourth structural unit derived from a (meth)acryl-based monomer including an amide group or a nitrile group; and/or
a lithium salt.

9. The binder as claimed in claim 8, wherein the (meth)acryl-based monomer comprises one of an amide group and a nitrile group, optionally wherein the fourth structural unit is represented by Chemical Formula 4: 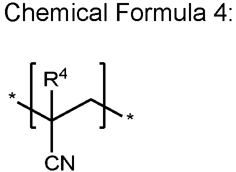
wherein, in Chemical Formula 4,
R⁴ comprises a hydrogen atom or a C1 to C20 alkyl group.

10. The binder as claimed in claim 8 or 9, wherein based on 100 wt% of the first structural unit, the second structural unit, the third structural unit, and the fourth structural unit:
the fourth structural unit is included in an amount in a range of 20 wt% to 50 wt%, wherein optionally the first structural unit is included in an amount in a range of 40 wt% to 70 wt%, the second structural unit is included in an amount in a range of 1 wt% to 15 wt%, and the third structural unit is included in an amount in a range of 1 wt% to 15 wt%.

11. The binder as claimed in any of claims 1-10, wherein the core comprises a polymer in which a monomer including at least one of a vinyl-based monomer, an unsaturated carboxylic acid alkyl ester monomer, a methacrylic acid monomer, and an unsaturated carboxylic acid amide monomer is polymerized.

12. The binder as claimed in any of claims 1-11, wherein the binder comprises 85 wt% to 95 wt% of the core and 5 wt% to 15 wt% of the shell based on 100 wt% of the binder.

13. An electrode for a rechargeable lithium battery, the electrode comprising:
the binder of any of claims 1-12; and
an electrode active material,
optionally wherein the electrode comprises a negative electrode, wherein the negative electrode preferably comprises a negative electrode active material comprising at least one of a carbon-based negative electrode active material and a silicon-based negative electrode active material.

14. A separator for a rechargeable lithium battery, the separator comprising:
a porous substrate, and a coating layer on one surface or on both surfaces of the porous substrate,
wherein the coating layer comprises the binder as claimed in any of claims 1-12.

15. A rechargeable lithium battery, comprising:
a negative electrode;
a positive electrode;
a separator between the negative electrode and positive electrode; and
an electrolyte;
wherein at least one of the negative electrode, the positive electrode, and the separator comprises the binder as claimed in any of claims 1-12.
